# EUROPEAN PATENT SPECIFICATION

(11) **EP 1 022 633 B1**
(45) Date of publication and mention of the grant of the patent: **26.05.2004**
(21) Application number: 99101186.7
(22) Date of filing: 22.01.1999
(51) Int. Cl.: G05D 16/06, G05D 16/18, B01D 46/04, B01D 46/24

(54) **A valve for regulating pressurised gas**
Ventil zur Regelung eines Druckgases
Vanne de régulation d'un gaz sous pression

(43) Date of publication of application: 26.07.2000
(73) Proprietor: IDR HOLDING S.A., 2086 Luxembourg (LU)
(72) Inventor: Ramponi, Sandro, Localita Porotto, 44100 Ferrara (FE) (IT)
(74) Representative: Gotra, Stefano

(56) References cited:
- EP-A- 0 024 444
- DE-C- 547 346
- US-A- 3 073 097
- US-A- 3 477 462
- US-A- 4 247 227
- PATENT ABSTRACTS OF JAPAN vol. 10, no. 218 (M-503) [2274], 30 July 1986 & JP 61 055482 A (MITSUTOYO), 19 March 1986

## Description

Specifically, but not exclusively, the invention can be usefully applied to controlling and commanding a device for cleaning powder filters.

During normal use the filtering walls of a powder filter are crossed, from the outside towards the inside, by air which is to be filtered and purified. When passing through the filtering walls the powder granules suspended in the air are halted and deposited on the walls, which become gradually blocked up. The filtering walls therefore have to be periodically cleaned to free them from deposited dust so that good filtering efficiency can be maintained. Various types of filter cleaning device are used for this cleaning operation, some of which can be actuated by means of a pneumatic signal, generally originating from the compressed air plant normally present in the workshop in which the filter is installed.

The main aim of the present invention is to provide a regulation valve which when the filter is blocked up can send a pneumatic signal which can be used to command a cleaning device of the filter itself

An advantage of the invention is to enable the cleaning device only when it is necessary to do so, with a consequent reduction in energy consumption and in filter wall wear, which is normally high due to the cleaning action.

A further advantage is that the invention makes available a regulation valve having a completely pneumatic action and which is absolutely free of electrical components and need for an electric source, giving greater safety and enabling the device to be used in an environment where there is a risk of explosion.

A still further advantage to that an extremely reliable valve is provided, even where it is used in especially dirty and dusty environments, or in places where corrosive substances and high temperatures abound.

A yet further advantage is that the valve of the invention is constructionally simple and economical.

These aims and advantages and others besides are all attained by the present invention, as it is characterised in the appended claims.

Further characteristics and advantages of the present invention will better emerge from the detailed description that follows of an embodiment thereof, here illustrated purely by way of a non-limiting example in the figures of the drawings, in which:
figure 1 is a partially sectioned view of a valve made according to the present invention;
figure 2 is a schematic diagram of an apparatus comprising a powder filter, a cleaning device for the filter and a cleaning device command device which is pneumatically supplied by the valve of figure 1.

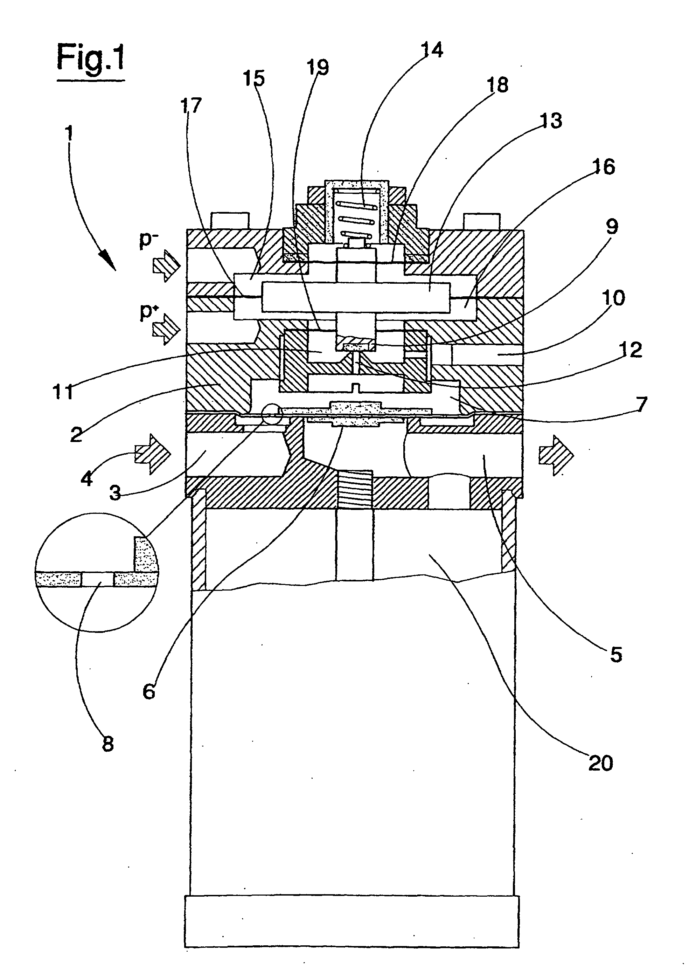

With reference to the above-mentioned figure 1, 1 denotes in its entirety a valve for regulating the supply of a pressurised gas.

The valve 1 comprises a valve body 2, made in several solidly connected parts, having an inlet mouth 3 for connecting up to a pressurised gas supply 4 (of known type and indicated by an arrow in figure 1) and an outlet mouth 5 predisposed for connecting up to a user.

Predisposed inside the valve body 2 is a first obturator 6 which is vertically mobile and able on command to open and close a connection between the inlet 3 and the outlet 5. The first obturator 6 is of a diaphragm type and exhibits an upper side which faces a cavity 7 connected to the inlet 3 through an orifice 8 afforded on the obturator 6 itself. Pressure in the cavity 7 above the first obturator 6 is operatively associated to the closure of the first obturator 6 itself

If the inlet 3 is connected to a source of compressed air and the cavity 7 remains closed and non-communicating with the outside ambient at atmospheric pressure, the compressed air supplied to the inlet mouth 3 can fill the cavity 7 through the orifice 8, so that the pressure in the cavity 7 can cause the closing of the obturator 6.

The valve 1 comprises a second obturator 9 predisposed internally of the valve body 2 to open or close on command a connection between the cavity 7 and a discharge 10 towards the ambient. The second obturator 9 is vertically mobile inside a chamber 11 communicating with the cavity 7 below by means of a through-hole 12 which can be opened or closed by the second obturator 9. The chamber 11 also communicates with the external discharge 10 at atmospheric pressure through a passage afforded in the valve body 2.

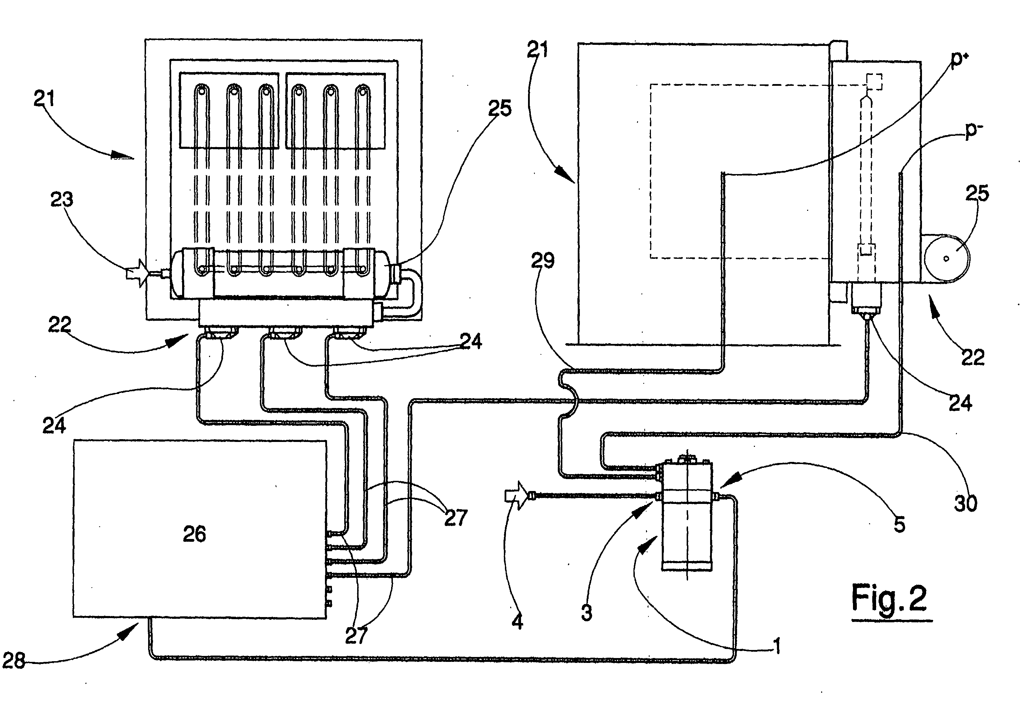

The second obturator 9 is solidly constrained to a rigid element 13 and is predisposed at the bottom part of the rigid element 13 itself. The second obturator 9 is normally closed by a spring 14 which acts on the top end of the rigid element 13. The second obturator 9 is opened by effect of a difference in two pressures, p+ and p-, which can terminate through two pilot tubes 29 and 30 (see figure 2) at two origins external to the valve 1. In the preferred use of the valve 1, the two above-mentioned origins are in fact and respectively the polluted atmosphere and the purified atmosphere of a powder filter 21. As is known, during filter 21 operation different pressures can obtain: for example, in the case of an aspiration filter, the pressure inside the filter 21 in the polluted atmosphere is greater than the pressure in the purified environment. The difference in pressure Δp=p+-p- grows as the filter blockage level grows.

The pilot tubes 29 and 30, which have one end connected to the filter 21, terminate at other ends thereof in two chambers 15 and 16 afforded inside the valve body 2. Pressures p+ and p-, relating to the polluted and purified environments, are sent to chambers 15 and 16, which are placed one above another and are separated by a first diaphragm 17 connected to the rigid element 13 and connected through the rigid element 13 itself to the second obturator 9. Pressure p+ in the lower chamber 16 is associated to the raising of the second obturator 9 and thus commands an opening of the connection between the cavity 7 and the discharge 10. Pressure p- in the upper chamber 15 is associated to the lowering of the second obturator 9 and thus commands a closing of the above-mentioned connection.

The pilot tubes 29 and 30 are connected to the filter 21 in such a way that the tube 29 leading to the lower chamber 16, associated to the opening of the second obturator 9 and therefore the connection between the cavity 7 and the discharge 10, is connected to the filter environment, which during operation exhibits a pressure p+ which is greater than the pressure p in the other environment; for example, in the case of an aspirating filter, the tube associated to the opening of the second obturator 9 is connected to the polluted environment exhibiting greater pressure p+. The filter environment at lower pressure p- is connected to the chamber associated with the closing of the second obturator 9. In this way the opening of the second obturator 9 is commanded by effect of a predetermined value of the difference of pressure Δp between the above-mentioned chambers 15 and 16 by means of a pre-regulation of the spring 14 load.

The valve 1 comprises two other diaphragms 18 and 19 connected to the rigid element 13 and vertically mobile solidly with the movements of the first diaphragm 17 and the second obturator 9. An upper second diaphragm 18 faces the upper chamber 15 and separates the chamber 15 from a hollow space at atmospheric pressure housing the spring 14. A lower third diaphragm 19 faces the lower chamber 16 and separates the chamber 16 from the chamber 11 in which the second obturator 9 is mobile.

The valve 1 comprises a storage tank 20 which can be sealedly closed and which is solidly connected to the valve body 2 and which is connected to the outlet 5.

Figure 2 shows an example of use of the valve of figure 1.

21 denotes a powder filter of known type, provided with a blower cleaning device 22, also of known type, connected to a source 23 of compressed air (known and schematically represented by an arrow) destined to blow on to the filter 21 by means of one or more intercept valves 24 (three are shown in the illustration). In figure 2 the filter 21 and the cleaning device 22 are illustrated in two different lateral views. The compressed air source 23 can supply a storage tank 25 supplying pressurised air to be sent on to the valves 24 for cleaning the filter.

During normal filter use each intercept valve 24 is closed and destined to be periodically opened to sent compressed air to the filtering surfaces of the filter itself The periodic opening of the intercept valves 24 is commanded by a command device 26, of known type and roughly illustrated in figure 2, powered by compressed air. The command device 26 receives the compressed air through the regulation valve of figure 1. The command device 26 is connected to the intercept valves 24 through respective connection tubes 27. The command device 26 can comprise, for example, a pulse generator for receiving in input 28 a pneumatic signal coming from the regulation valve 1 and transforming the signal into an output signal constituted by a series of pulses which can be used to pilot an actuator, of known type, able momentarily to open one or more valves which place one or more connection tubes 27 in communication with a discharge. The discharging of a tube 27 causes the momentary opening of the relative intercept valve 24 and thus sends pressurised air from the tank 25 towards the dirty filtering surfaces of the filter 21 operatively associated to the open valve 24.

A brief description has been made of a special type of device 22 for cleaning a filter and a special type of command device 26 therefor. It is however possible to use the regulation valve 1 of figure 1 in other known types of cleaning devices actuated by pressurised gas supply.

The operation of the regulation valve 1 of the invention will now be briefly described.

While the filtering surfaces of the filter 21 are relatively clean, the pressure differential between the two chambers 15 and 16 is small and insufficient to open the second obturator 9. In this situation, the first obturator 6 is closed and the pressurised gas coming from the source 4 is not supplied by the command device 26, which remains inactive. When the pressure differential (Δp=p+-p-) between the polluted environment and the dirty environment of the filter 21 reaches a sufficiently high level, the second obturator 9 can lift, overcoming the force of the spring 14. The cavity 7 overlying the first obturator 6 enters into communication with the discharge 10, so that the first obturator 6 itself lifts and allows the flow of compressed air coming from the source 4 to pass towards the outlet mouth 5 and thus towards the command device 26. The command device 26, on receiving a supply of compressed air, is actuated and opens (following known processes) the intercept valves 24 of the cleaning device 22.. By effect of the cleaning action of the filter 21, the pressure difference Δp between the polluted atmosphere and the purified atmosphere is reduced, and the second obturator accordingly returns into the closed position. Consequently the pressure in the cavity 7 above the first obturator 6 increases until the first obturator 6 also returns into the closed position, interrupting the pressurised gas supply to the user, which user in this case is the command device 26. The cleaning device 22 thus remains inactive for a certain time period, until when, by effect of a new blockage of the filter 21, the pressure differential Δp between the filter environments exceeds the predetermined limit, causing a new cycle of the above-described type.

In the case of a valve provided with a storage tank 20, operation is as follows. On opening of the first obturator 6 the tank is pressurised. On closure of the first obturator, the tank 20 provides a reserve of pressurised gas to the outlet 5 of the valve 1, which is then sent on to the external user. In the case of the application illustrated in figure 2, the use of the storage tank 20 enables the filter cleaning device 22 to function even after the pressure differential Δp between the environments, both polluted and purified, has returned below the limit value determining the opening of the obturators 6 and 9. The time during which the cleaning device 22 is active even after the return of the pressure differential to below the limit Δp value depends on the volume of the storage tank 20.

The regulation valve 1 enables the means for filter cleaning 21 only where there is effectively a need to do so, i.e. when the filter is blocked as revealed by a reading of the pressure differential Δp between the polluted and cleaned environments.

Advantageously the valve 1 does not have any kind of electrical activation, but is entirely activated by pneumatic means.

Experiments have revealed that the valve of the inventions keeps itself clean, although it normally works in dusty environments, and therefore needs only very summary maintenance. In particular, it has been found that the amount of dust that gets inside the valve 1 itself through the pilot tube 29 connected to the polluted environment of the filter 21 is relatively small, and in any case not of a quantity which could cause problems to valve 1 operation.

The valve of the invention could be applied to all types of means for commanding a cleaning device for filters, different from what is illustrated in figure 2. For example, the pressurised gas sent in outlet 5 of the regulation valve 1 can be transmitted directly to a large-size intercept valve connected to a source of compressed air, in order the valve can be opened to send the compressed air on to the dirty surfaces of the filter.

## Claims

1. A valve for regulating pressurised gas, comprising:
a valve body (2) bearing an inlet (3) for connecting up with a source (4) of compressed gas, and an outlet (5) for connecting up with a user;
a first obturator (6) predisposed internally of the valve body, for opening and closing a connection between the inlet (3) and the outlet (5), said first obturator (6) having a side facing into a cavity (7) communicating with the inlet (3) through an orifice (8), a pressure level in the cavity (7) being associated with a closing of the first obturator (6);
a second obturator (9) located internally of the valve body (2) for opening and closing a connection between the cavity (7) and a discharge (10) to the ambient; the second obturator (9) being normally closed and being commanded to open by a pressure differential (Δp) between two pressures (p+ and p-) which can be read by means of two pilot tubes (29 and 30) by two environments external of the valve (1);
the outlet (5) being connected with a filter cleaning device (22), pressurised gas in outlet being usable for commanding the filter cleaning device (22);
the second obturator (9) is being opened by reading the differential (Δp) in two pressures (p+ and p-) relating to a polluted atmosphere and a cleaned atmosphere of a filter (21) associated to said filter cleaning device (22);
c**haracterized in that** it comprises a storage tank (20) connected to the outlet (5).

2. The valve of claim 1, **characterised in that** it comprises a first diaphragm (17) which separates two chambers (15 and 16) afforded inside the valve body (2); each of the two chambers (15 and 16) being in communication with one of two pilot tubes (29 and 30); said first diaphragm (17) being connected to the second obturator (9) and commanding the second obturator (9) to open by effect of a reaching of a predetermined pressure differential (Δp) between the two chambers (15 and 16).

3. The valve of claim 2, **characterised in that** it comprises a second diaphragm (18) and a third diaphragm (19), respectively facing one of the two chambers (15 and 16) and connected to the first diaphragm (17) and to the second obturator (9) by means of a rigid element (13).

4. The valve of any one of the preceding claims, **characterised in that** the second obturator (9) is commanded to close by a spring (14).

## Patentansprüche

1. Ventil zur Regelung eines Druckgases, enthaltend:
- einen Ventilkörper (2) mit einem Einlass (3) für den Anschluss an eine Druckgasleitung (4) und einen Auslass (5) für den Anschluss an einen Verbraucher;
- ein erstes Absperrorgan (6), vorgesehen im Inneren des Ventilkörpers, zum Öffnen und Schliessen einer Verbindung zwischen dem Einlass (3) und dem Auslass (5), wobei das genannte erste Absperrorgan (6) eine Seite aufweist, die einem Hohlraum (7) zugewandt ist, der durch eine Öffnung (8) mit dem Einlass (3) in Verbindung steht, und wobei eine Druckhöhe in dem Hohlraum (7) mit dem Schliessen des ersten Absperrorgans (7) zusammenhängt;
- ein zweites Absperrorgan (9), angeordnet im Inneren des Ventilkörpers (2) zum Öffnen und Schliessen einer Verbindung zwischen dem Hohlraum (7) und einem Ablass (10) in den Aussenbereich; wobei das zweite Absperrorgan (9) normalerweise geschlossen ist und sein Öffnen durch eine Druckdifferenz (Δρ) zwischen zwei Drücken (p+ und p-) ausgelöst wird, welche mit Hilfe von zwei Steuerleitungen (29 und 30) von zwei ausserhalb des Ventils (1) liegenden Bereichen erfasst werden können;
- wobei der Auslass (5) mit einer Filterreinigungsvorrichtung (22) verbunden ist, und wobei das Druckgas im Auslass zum Betätigen der Filterreinigungsvorrichtung (22) verwendbar ist;
- wobei das zweite Absperrorgan (9) durch Ablesen der Differenz (Δρ) zwischen den beiden Drücken (p+ und p-) geöffnet wird, die sich auf eine verunreinigte Atmosphäre und eine gereinigte Atmosphäre eines Filters (21) beziehen, welcher der genannten Filterreinigungsvorrichtung (22) zugeordnet ist;
- **dadurch gekennzeichnet, dass** es einen an den Auslass (5) angeschlossenen Sammelbehälter (20) enthält.

2. Ventil nach Patentanspruch 1, **dadurch gekennzeichnet, dass** es eine erste Membrane (17) enthält, welche zwei im Inneren des Ventilkörpers (2) aufgewiesene Kammern (15 und 16) voneinander trennt; wobei jede der beiden Kammern (15 und 16) mit einer der beiden Steuerleitungen (29 und 30) in Verbindung ist; und wobei die genannte erste Membrane (17) an das zweite Absperrorgan (9) angeschlossen ist und durch die Wirkung einer vorgegebenen Druckdifferenz (Δρ) zwischen den beiden Kammern (15 und 16) das Öffnen des zweiten Absperrorgans (9) auslöst.

3. Ventil nach Patentanspruch 2, **dadurch gekennzeichnet, dass** es eine zweite Membrane (18) und eine dritte Membrane (19) enthält, jeweils einer der beiden Kammern (15 und 16) zugewandt und an die erste Membrane (17) und an das zweite Absperrorgan (9) mit Hilfe eines starren Elementes (13) angeschlossen.

4. Ventil nach einem beliebigen der vorstehenden Patentansprüche, **dadurch gekennzeichnet, dass** das zweite Absperrelement (9) zum Schliessen durch eine Feder (14) angetrieben wird.

## Revendications

1. Vanne de régulation d'un gaz sous pression, comprenant:
- un corps de vanne (2) comportant une entrée (3) pour la connexion à une source (4) de gaz sous pression, et une sortie (5) pour la connexion avec un utilisateur;
- un premier obturateur (6) prédisposé à l'intérieur du corps de valve, pour ouvrir et fermer la connexion entre l'entrée (3) et la sortie (5), ledit premier obturateur (6) ayant un côté faisant face à une cavité (7) communiquant avec l'entrée (3) au travers d'un orifice (8), le niveau de pression dans la cavité (7) étant associé à la fermeture du premier obturateur (6);
- un second obturateur (9) situé à l'intérieur du corps de vanne (2) pour ouvrir et fermer une connexion entre la cavité (7) et un échappement (10) vers l'environnement externe; le second obturateur (9) étant normalement fermé et étant commandé pour s'ouvrir par une différence de pression (Δp) entre deux pressions (p+ et p-) qui peuvent être relevées au moyen de deux tubes de pilotage (29 et 30) dans deux environnements externes de la vanne (1);
la sortie (5) étant connectée à un dispositif de nettoyage de filtre (22), un gaz sous pression en sortie étant utilisable pour commander le dispositif de nettoyage de filtre (22);
le second obturateur (9) étant ouvert par la différence de pression (Δp) entre deux pressions (p+ et p-) relatives à un environnement pollué et à un environnement propre d'un filtre (21) associé audit dispositif de nettoyage de filtre (22);
**caractérisée en ce qu'**elle comprend un réservoir de stockage (20) connecté à la sortie (5).

2. Vanne de régulation selon la revendication 1,
**caractérisée en ce qu'**elle comprend un premier diaphragme (17) qui sépare deux chambres (15 et 16) formées à l'intérieur du corps de vanne (2); chacune des deux chambres (15 et 16) étant en communication avec un des deux tubes de pilotage (29 et 30); ledit premier diaphragme (17) étant connecté au second obturateur (9) et commandant le second obturateur (9) pour qu'il s'ouvre sous l'effet d'une différence de pression prédéterminée (Δp) entre les deux chambres (15 et 16).

3. Vanne de régulation selon la revendication 2, **caractérisée en ce qu'**elle comprend un second diaphragme (18) et un troisième diaphragme (19), faisant respectivement face à l'une des deux chambres (15 et 16) et connectés au premier diaphragme (17) et au second obturateur (9) au moyen d'un élément rigide (13).

4. Vanne selon n'importe laquelle des revendications précédentes, **caractérisée en ce que** le second obturateur (9) est commandé en fermeture par un ressort (14).
